# EUROPÄISCHE PATENTSCHRIFT

(11) **EP 4 614 087 B1**
(45) Veröffentlichungstag und Bekanntmachung des Hinweises auf die Patenterteilung: **02.12.2026**
(21) Anmeldenummer: 25156022.3
(22) Anmeldetag: 05.02.2025
(51) Int. Cl.: F24H 1/00, C01B 15/01, F24D 101/30

(54) **VERFAHREN UND HEIZSYSTEM ZUM HEIZEN, INSBESONDERE EINES GEBÄUDES**
METHOD AND HEATING SYSTEM FOR HEATING, IN PARTICULAR A BUILDING
PROCÉDÉ ET SYSTÈME DE CHAUFFAGE POUR CHAUFFER, EN PARTICULIER UN BÂTIMENT

(30) Priorität: 06.03.2024 DE 102024106489
(43) Veröffentlichungstag der Anmeldung: 10.09.2025
(73) Patentinhaber: maschinendoc.com GmbH & Co. KG, 26446 Friedeburg (DE)
(72) Erfinder: Schaub, Thomas, 26607 Aurich (DE); Wessels, Marcel, 26340 Zetel (DE)
(74) Vertreter: Jabbusch, Matthias

(56) Entgegenhaltungen:
- EP-A1- 2 508 498
- CH-B1- 704 556
- DE-U1- 202009 018 691

## Beschreibung

Die Erfindung betrifft ein Verfahren zum Heizen mit Energie, die zuvor in Form von Wasserstoffperoxid (H₂O₂) als chemischer Langzeitenergiespeicher gespeichert wird, nach dem Oberbegriff des Patentanspruchs 1 und ein Heizsystem zum Heizen mit dieser Energie, nach dem Oberbegriff des Patentanspruchs 12. Insbesondere soll aus überschüssiger elektrischer Energie, die beispielsweise bei solarer Erzeugung im Sommer lokal anfällt, Wasserstoffperoxid erzeugt und gespeichert werden und dadurch Energie für längere Zeit verlustfrei gespeichert werden, um in Zeiten eines Defizits erzeugter elektrischer Energie wieder durch Zersetzung des Wasserstoffperoxids freigesetzt zu werden. Mit der freigesetzten Energie soll dann insbesondere im Winter ein Gebäude beheizt werden.

Aus der deutschen Gebrauchsmusterschrift DE 20 2009 018 691 U1 ist eine Heizung bekannt, bei ein bereitgestelltes und Wasserstoffperoxid enthaltenes Katalysatorfluid in eine als Reaktor bezeichnete Heizkammer geleitet wird, in dem ein Katalysatorkörper zur katalytischen exothermen Zersetzung des Katalysatorfluids angeordnet ist. Das Katalysatorfluid enthält in einer Ausführungsform maximal 20 Gewichtsprozent, auch Massenprozent genannt, Wasserstoffperoxid. Der Katalysatorkörper kann Verbindungen und Kombinationen von Elementen enthalten, die aus einer angegebenen Menge ausgewählt sind. Diese angegebene Menge enthält unter anderem Mangan und eine Vielzahl weiterer Elemente.

Ein gattungsgemäßes Verfahren und eine gattungsgemäße derartige Vorrichtung sind aus der deutschen Patentschrift DE 37 27 630 C1 bekannt.

Bei einer Ausführungsform dieses bekannten Verfahrens wird eine Wasserstoffperoxidlösung durch eine photokatalytische chemische Reaktion erzeugt und gespeichert. Später wird die gespeicherte Wasserstoffperoxidlösung bei einer Ausführungsform verdünnt und in einen sogenannten Zersetzungsreaktor geleitet, wo das enthaltene Wasserstoffperoxid mittels Katalysatoren wie Braunstein oder Edelmetallen unter Abgabe von Wärme so langsam zersetzt wird, dass die Reaktionstemperatur unterhalb des Siedepunktes bleibt.

Die im Reaktor oder in der Heizkammer tatsächlich stattfindenden Reaktionen mit dem Wasserstoffperoxid und am jeweiligen Katalysator sowie die Geschwindigkeit der stattfindenden Reaktionen mit der Freisetzung von Wärme hängen von einer Vielzahl von Parametern ab. Es hat sich gezeigt, dass in einer Vielzahl von Konstellationen entweder unerwünschte Reaktionen am Katalysator stattfinden oder die Zersetzung viel zu lange dauert, um ausreichend thermische Energie für eine ökonomische Verwertung freizusetzen. Insbesondere der Katalysator müsste daher entweder regelmäßig ersetzt oder für eine angemessene Zersetzungsgeschwindigkeit zusammen mit dem Reaktor sehr groß dimensioniert werden. Eine langjährige effiziente Nutzung ist dadurch beeinträchtigt.

Der Erfindung liegt ausgehend von der DE 37 27 630 C1 die Aufgabe zugrunde, ein Verfahren und ein Heizsystem anzugeben, mit denen eine langjährige kostengünstige Nutzung von Wasserstoffperoxid zum Heizen, insbesondere eines Gebäudes, möglich ist.

Die Erfindung löst diese Aufgabe mit einem Verfahren nach dem Patentanspruch 1 und mit einem Heizsystem nach dem Patentanspruch 12. Vorteilhafte Ausführungsformen der Erfindung sind in den Unteransprüchen angegeben.

Bei einem Verfahren zum Heizen, insbesondere eines Gebäudes, mit Energie, die zuvor in Form von Wasserstoffperoxid (H₂O₂) als chemischer Langzeitenergiespeicher gespeichert wird, wobei eine Erzeugungseinheit eines Heizsystems aus zumindest Wasser und mittels zugeführter Energie das Wasserstoffperoxid erzeugt und in einer wässrigen Wasserstoffperoxidlösung, die Wasser und das im Wasser gelöste Wasserstoffperoxid enthält, bereitstellt, wobei das Heizsystem die bereitgestellte Wasserstoffperoxidlösung in einer Speichereinheit des Heizsystems speichert, wobei das Heizsystem in der Speichereinheit gespeicherte Wasserstoffperoxidlösung in eine Heizkammer des Heizsystems leitet und wobei das Heizsystem in der Heizkammer befindliches Heizwasser, welches die aus der Speichereinheit zugeführte Wasserstoffperoxidlösung enthält, durch katalytische exotherme Zersetzung des im Heizwasser enthaltenen Wasserstoffperoxids unter Abgabe von Wärme an das Heizwasser aufheizt, ist erfindungswesentlich vorgesehen, dass das in der Heizkammer befindliche Heizwasser frei im Heizwasser bewegbares, insbesondere im Heizwasser aufwirbelbares, Manganhydroxid (Mn(OH)₂) als Katalysator enthält, welches die Zersetzung des Wasserstoffperoxids beschleunigt.

Bei einem Heizsystem zum Heizen, insbesondere eines Gebäudes, mit Energie, die zuvor in Form von Wasserstoffperoxid (H2O2) als chemischer Langzeitenergiespeicher gespeichert wird, mit einer Erzeugungseinheit zur Erzeugung des Wasserstoffperoxids aus zumindest Wasser und mittels zugeführter Energie und zur Bereitstellung des erzeugten Wasserstoffperoxids in einer wässrigen Wasserstoffperoxidlösung, die Wasser und das im Wasser gelöste Wasserstoffperoxid enthält, mit einer Speichereinheit zum Speichern der bereitgestellten Wasserstoffperoxidlösung, mit einer Heizkammer und mit Heizwasser, das sich in der Heizkammer befindet, wobei das Heizsystem ausgebildet ist zum Einleiten von in der Speichereinheit gespeicherter Wasserstoffperoxidlösung in die Heizkammer und zum Aufheizen des in der Heizkammer befindlichen Heizwassers, welches die aus der Speichereinheit zugeführte Wasserstoffperoxidlösung enthält, durch katalytische exotherme Zersetzung des im Heizwasser enthaltenen Wasserstoffperoxids unter Abgabe von Wärme an das Heizwasser, ist erfindungswesentlich vorgesehen, dass das in der Heizkammer befindliche Heizwasser frei im Heizwasser bewegbares, insbesondere im Heizwasser aufwirbelbares, Manganhydroxid (Mn(OH)2) als Katalysator zur Beschleunigung der Zersetzung des Wasserstoffperoxids enthält.

Das Manganhydroxid ist also dem Heizwasser zugesetzt und nicht als Stück in der Heizkammer angeordnet oder Bestandteil der Heizkammer. Die Heizkammer kann auch als Reaktor bezeichnet werden. Das Manganhydroxid ist bewegbar, insbesondere aufwirbelbar, im Heizwasser befindlich und dadurch verteilt in der Heizkammer angeordnet. Das Manganhydroxid kann dadurch über eine vergleichsweise große Oberfläche mit dem Wasserstoffperoxid in Kontakt treten. Die Zersetzung des Wasserstoffperoxids mittels des Katalysators Manganhydroxid wird dadurch prinzipiell stark beschleunigt. Dadurch ist es möglich, das Wasserstoffperoxidlösung mit nur einem geringen Anteil des Wasserstoffperoxids vorzusehen und dennoch eine ausreichend schnelle Reaktionsgeschwindigkeit zu erhalten.

Die Wahl von Manganhydroxid als Katalysator ist dabei außerordentlich wichtig für die Beständigkeit des Katalysators. Dies zeigt sich sogar im direkten Vergleich zu anderen Manganverbindungen wie Mangandioxid, bei denen bei ansonsten gleichen Bedingungen, insbesondere der niedrigen Konzentration des Wasserstoffperoxids, ein ungewünschter Verbrauch des Katalysators beobachtet werden kann. Die geringe Konzentration des Wasserstoffhydroxids in Kombination mit der Wahl von Manganhydroxid als Katalysator bewirkt hingegen, dass der Katalysator Manganhydroxid auch bei dauerhafter Verwendung ganz oder zumindest weitgehend unverändert im Heizwasser erhalten bleibt und dort die Zersetzung des Wasserstoffperoxids beschleunigen kann.

Die der Erzeugungseinheit zugeführte Energie ist insbesondere erneuerbare Energie, also Energie, die aus erneuerbaren Energien gewonnen und der Erzeugungseinheit zunächst als elektrische Energie bereitgestellt wird. Besonders bevorzugt wird die Energie mittels Photovoltaik gewonnen. Selbstverständlich eigenen sich auch andere erneuerbare Energien für die Erfindung wie beispielsweise Windenergie oder Energie aus Biogasanlagen. Mittels Photovoltaik in elektrische Energie umgewandelte Solarenergie profitiert jedoch besonders gut von der erfindungsgemäßen Langzeitspeicherung, da Solarenergie im jahreszeitlichen Verlauf besonders ungleichmäßig zu Verfügung steht, nämlich im Sommer in weitaus größerem Umfang anfällt als im Winter. Wasserstoffhydroxid eignet sich hervorragend für die Langzeitspeicherung der Energie, da es eine hohe Speicherdichte von mehr als 1000 kW, insbesondere von etwa 1162 KW, pro Kubikmeter hat und auch bei langer Lagerung stabil bleibt und Energie bis zu seiner von außen angeregten thermischen Zersetzung daher verlustfrei speichert.

Das im Heizwasser in der Heizkammer befindliche Manganhydroxid ist insbesondere ein Pulver. Das Pulver besteht vorzugsweise aus einer Vielzahl fester Partikel mit einem Durchmesser von weniger als 3 mm, bevorzugt höchstens 2 mm. Weiter bevorzugt ist das Manganhydroxid oder das Pulver granulierte Materie, besteht also aus festen Partikeln, insbesondere Körnern, makroskopischer Größe, insbesondere mit einem Durchmesser von mindestens 1 mm. Durch das Vorliegen des Manganhydroxids als Pulver verteilt sich das Manganhydroxid gut im Heizwasser. Besonders bevorzugt verbleibt das Manganhydroxid im Heizwasser, insbesondere über einzelne Heizvorgänge hinaus. Insbesondere kann das Manganhydroxid dauerhaft oder zumindest über einen langen Zeitraum als Katalysator genutzt werden, wenn der Heizkammer nur geklärtes Heizwasser entnommen wird und immer zumindest etwas Heizwasser mit dem darin befindlichen Manganhydroxid in der Heizkammer verbleibt. Hierfür kann sich das Manganhydroxid am Boden der Heizkammer absetzen oder zumindest in einen unteren Bereich der Heizkammer absinken. Dies kann durch die Formgebung oder die Füllung der Heizkammer unterstützt werden.

Die Heizkammer ist vorzugsweise zylinderförmig ausgebildet. Bei einer vorteilhaften Ausführungsform der Erfindung ist vorgesehen, dass die Heizkammer derart bemessen und das Heizsystem dazu ausgebildet ist, die Heizkammer bis zu 1,5 mal bis 2,5 mal, insbesondere 1,8 mal bis 2,2 mal, besonders bevorzugt etwa 2 mal, so hoch zu befüllen, wie die Heizkammer breit ist. Dadurch kann eine gute Durchmischung des Manganhydroxids mit dem Wasserstoffperoxid erreicht werden und sich das Manganhydroxid nach dem Heizvorgang gut und insbesondere ausreichend schnell im unteren Bereich der Heizkammer absetzen.

Besonders bevorzugt weist das Heizsystem ein Rührwerk für eine Durchmischung des Manganhydroxids mit dem Wasserstoffperoxid in der Heizkammer auf. Insbesondere nach dem Einlassen der Wasserstoffperoxidlösung in die Heizkammer und bis zur Umsetzung des darin enthaltenen Wasserstoffperoxids sorgt das Rührwerk für eine Durchmischung des Heizwassers und damit für eine Durchmischung des darin enthaltenen Manganhydroxids mit dem Wasserstoffperoxid. Zur selben Zeit kommt damit viel Wasserstoffperoxid mit der Oberfläche des Manganhydroxids, insbesondere mit der Oberfläche der aus Manganhydroxid bestehenden Partikel, in Kontakt und wird dadurch zur Zersetzung angeregt.

Das Rührwerk weist bevorzugt einen in der Heizkammer angeordneten Magnetstab auf und weist einen außerhalb der Heizkammer angeordneten magnetischen Antrieb für den Magnetstab auf. Verfahrensgemäß treibt das Rührwerk den Magnetstab an und lässt den Magnetstab dadurch vorzugsweise mit einer Frequenz von mindestens 1000 U/min und höchstens 1400 U/min, insbesondere von mindestens 1100 U/min und höchstens 1300 U/min, besonders bevorzugt von etwa 1200 U/min, rotieren, um für eine Durchmischung des Manganhydroxids mit dem Wasserstoffperoxid im Heizwasser zu sorgen. Der Magnetstab weist vorzugsweise einen Durchmesser im Bereich von 10 mm bis 20 mm, insbesondere von etwa 15 mm, auf.

Vorzugsweise nach der, insbesondere vollständigen, Zersetzung des zuvor im Heizwasser enthaltenen Wasserstoffperoxids wird das Rührwerk abgestellt, so dass nachfolgend das Manganhydroxid absinken kann. Verfahrensgemäß ist vorzugsweise vorgesehen, dass das Heizsystem nach mindestens einem Heizvorgang oder mehreren Heizvorgängen unter Zersetzung des jeweils in der Heizkammer befindlichen Wasserstoffperoxids, insbesondere eine definierte Zeitdauer, wartet, bis sich das Manganhydroxid in einem unteren Bereich der Heizkammer zumindest weitgehend abgesetzt hat und sich somit geklärtes Wasser in einem darüber befindlichen oberen Bereich der Heizkammer befindet, und hiernach geklärtes Wasser aus dem oberen Bereich der Heizkammer ablässt, wobei Heizwasser mit dem Manganhydroxid im unteren Bereich der Heizkammer verbleibt. Das Heizsystem ist vorzugsweise entsprechend dazu eingerichtet.

Die Erzeugungseinheit ist insbesondere eine Elektrolysezelle, die dazu eingerichtet ist, das Wasserstoffperoxid allein aus Wasser mittels zugeführter elektrischer Energie zu erzeugen und das Wasserstoffperoxid verfahrensgemäß erzeugt. Zusätzlich wird dabei Wasserstoff erzeugt, der gespeichert und auf andere Weise genutzt werden kann. Lokal mittels Photovoltaikmodulen im Sommer erzeugte elektrische Energie kann somit zur Erzeugung des Wasserstoffperoxids genutzt und eingelagert werden. Alternativ wird das Wasserstoffperoxid aus Wasser und Sauerstoff erzeugt. Weitere Verfahren und die dazu erforderlichen Vorrichtungen zur Gewinnung von Wasserstoffperoxid mit Hilfe elektrischer Energie sind dem Fachmann bekannt.

Bei besonders vorteilhaften Ausführungsformen der Erfindung ist das Heizsystem dazu eingerichtet, die Zersetzung des Wasserstoffperoxids mittels der schrittweisen Zugabe von Wasserstoffperoxidlösung in die Heizkammer und der jeweils nachfolgenden, insbesondere vollständigen, Zersetzung des jeweils in der Heizkammer befindlichen Wasserstoffperoxids derart zu steuern, dass die Temperatur in der Heizkammer stufenweise über mehrere Temperaturstufen, insbesondere über mehrere zwischen 8 Grad und 12 Grad Celsius, besonders bevorzugt in etwa 10 Grad Celsius, auseinanderliegende Temperaturstufen, erhöht wird. Verfahrensgemäß steuert die Heizeinrichtung die Zersetzung entsprechend durch das Einleiten der geeignet konzentrierten Wasserstoffperoxidlösung in die Heizkammer.

Das jeweils im Heizwasser befindliche Wasserstoffperoxid wird bei jeder Stufe der Temperaturerhöhung jeweils vollständig oder nahezu vollständig umgesetzt. Die Erwärmung des Heizwassers in jeder Temperaturstufe ergibt sich hierbei aus der Konzentration des Wasserstoffperoxids im Heizwasser.

Bei der stufenweisen Erwärmung des Heizwassers ergibt sich stets eine gleichmäßige Temperaturverteilung im Heizwasser und wird besonders zuverlässig eine Zersetzung des Katalysators, also des Manganhydroxids, vermieden.

Nach einer Erwärmung des Heizwassers durch die Zersetzung des darin erhaltenen Wasserstoffperoxids wird vorzugsweise nachfolgend dem Heizwasser Wärmeenergie, insbesondere über einen Wärmetauscher, entnommen, um damit beispielsweise Heizungswasser für die Beheizung eines Gebäudes zu erwärmen. Wenn beispielsweise Trinkwasser auf eine vergleichsweise höhere Temperatur erhitzt werden soll, kann es sein, dass auch das Heizwasser zunächst auf eine höhere Temperatur erhitzt werden muss. In diesem Fall wird dem Heizwasser mehrmals hintereinander Wasserstoffperoxidlösung zugesetzt und das Heizwasser somit in mehreren Stufen erhöht, bevor unter Entnahme von Wärmeenergie aus dem Heizwasser damit dann das Trinkwasser erwärmt wird. Vorteilhafterweise ist das Heizsystem dazu eingerichtet, derart viel Manganhydroxid in der Heizkammer vorzuhalten und in die Heizkammer derart viel Wasserstoffhydroxidlösung zu leiten, dass für den Zersetzungsprozess in der Heizkammer Manganhydroxid in einer Konzentration im Bereich von 0,010 mol bis 0,014 mol, weiter bevorzugt in einer Konzentration von 0,011 mol bis 0,013 mol, besonders bevorzugt in einer Konzentration von etwa 0,012 mol, pro Liter Heizwasser vorliegt.

Die Menge des Heizwassers nimmt durch die Zersetzung des Wasserstoffperoxids so lange zu, bis Klarwasser, also nach der Zersetzung des zuletzt zugeführten Wasserstoffperoxids von Manganhydroxid geklärtes Heizwasser, aus dem Heizwasser abgezogen wird. Die Differenz zwischen der minimalen Menge Heizwasser nach dem Abziehen von Klarwasser und der maximalen Menge Heizwasser, bei der verfahrensgemäß vor der erneuten Zufuhr von Wasserstoffperoxidlösung zunächst wieder Klarwasser abgezogen wird, beträgt vorzugsweise maximal 5 Gewichtsprozent, weiter bevorzugt maximal 4 Gewichtsprozent, besonders bevorzugt in etwa 3 Gewichtsprozent, der minimalen Menge des Heizwassers. Wenn also beispielsweise aus minimalen 300 Litern Heizwasser 303 Liter Heizwasser geworden sind, werden die 3 Liter Überwasser abgezogen.

Bei einer weiteren besonders vorteilhaften Ausführungsform der Erfindung ist das Heizsystem dazu eingerichtet, mittels der Menge der in die Heizkammer eingeleiteten Wasserstoffperoxidlösung und mittels der Konzentration des Wasserstoffperoxids in dieser Wasserstoffperoxidlösung die Konzentration des zu zersetzenden Wasserstoffperoxids im Heizwasser unmittelbar nach dem Einlassen der Wasserstoffperoxidlösung in die Heizkammer auf einen Wert im Bereich von 0,3 mol pro Liter Heizwasser bis 0,9 mol pro Liter Heizwasser, weiter bevorzugt im Bereich von 0,4 mol pro Liter Heizwasser bis 0,6 mol pro Liter Heizwasser, besonders bevorzugt von etwa 0,44 mol pro Liter Heizwasser, einzustellen. Verfahrensgemäß stellt das Heizsystem vorzugsweise diese Konzentration ein. Damit wird bevorzugt eine Konzentration von etwa 1,6 Gewichtsprozent Wasserstoffperoxid im Heizwasser erreicht. Wenn das Überwasser zuvor nicht abgeführt wurde und dadurch die Mange Heizwasser gegenüber dem vorherigen Heizvorgang zugenommen hat, wird für den folgenden Heizvorgang vorzugsweise eine vergleichsweise größere Menge der Wasserstoffperoxidlösung als für den vorherigen Heizvorgang zugeführt, um wieder möglichst exakt die gewünschte Konzentration Wasserstoffperoxid im Heizwasser zu erhalten, die dann für die gewünschte Temperaturerhöhung des Heizwassers, insbesondere um etwa 10 Grad Celsius, sorgt. Das Wasserstoffperoxid für die Wasserstoffperoxidlösung wird besonders bevorzugt aus Wasser elektrochemisch, insbesondere mittels eines Elektrokatalyseverfahrens, erzeugt. Dabei wird mit der sogenannten Zwei-Elektroden-Oxidation von Sauerstoff das Wasserstoffperoxid bei Nutzung eines Katalysators in Form einer Elektrode direkt in einem Schritt aus Wasser erzeugt. Von Vorteil ist hierbei insbesondere der hohe Wirkungsgrad von mehr etwa 96 Prozent.

Alternativ ist die direkte Synthese aus Wasserstoff und Sauerstoff mit Hilfe eines Katalysators möglich. Bekannt und für die vorliegende Erfindung nutzbar ist auch die direkte elektrochemische Synthese von hochreinem Wasserstoffperoxid aus Wasser und dem Sauerstoff aus der Umgebungsluft mit Hilfe von elektrischer Energie.

Bei einer besonders bevorzugten Ausführungsform des Verfahrens leitet das Heizsystem die Wasserstoffperoxidlösung aus der Speichereinheit mit einem Anteil Wasserstoffperoxid in der Wasserstoffperoxidlösung von weniger als 2,0 Gewichtsprozent, insbesondere maximal 1,8 Gewichtsprozent, besonders bevorzugt maximal 1,6 Gewichtsprozent, in die Heizkammer. Das Heizsystem ist bevorzugt entsprechend dazu eingerichtet.

Weitere Ausführungsformen ergeben sich aus den Ansprüchen, aus den beigefügten Zeichnungen und aus der nachfolgenden Beschreibung eines in den Zeichnungen dargestellten besonders bevorzugten Ausführungsbeispiels der Erfindung. In den Zeichnungen zeigen:
- Figur 1:: eine zum erfindungsgemäßen Heizsystem gehörende und im erfindungsgemäßen Verfahren zum Heizen verwendbare Heizkammer gemäß einem Ausführungsbeispiel der Erfindung in vereinfachter Schnittdarstellung von der Seite;
- Figur 2:: Ein Fließschema mit Einrichtungen des erfindungsgemäßen Heizsystems in vereinfachter schematischer Darstellung; und
- Figur 3:: ein Flussdiagramm mit einigen grundlegenden Schritten des erfindungsgemäßen Verfahrens.

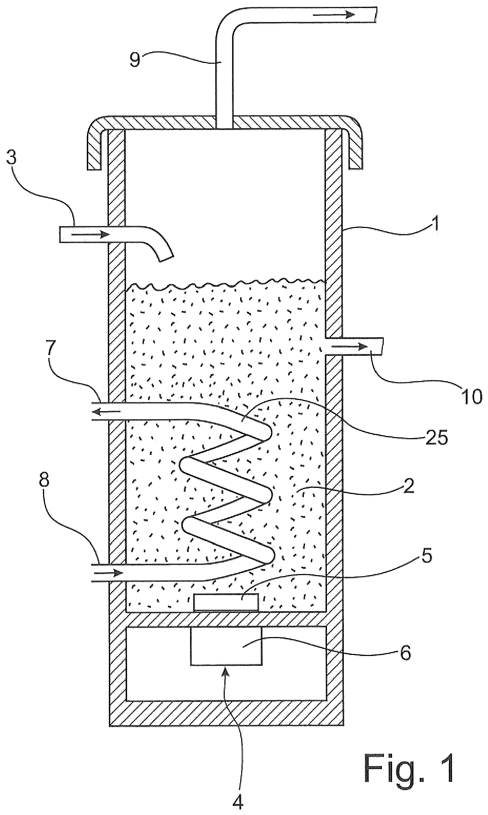

Figur 1 zeigt eine Heizkammer 1 für ein erfindungsgemäßes Heizsystem. Die Heizkammer 1 ist mit Heizwasser 2 bis zu einer Füllhöhe gefüllt. Im Heizwasser 2 ist Manganhydroxid als Pulver enthalten. Das Pulver besteht aus einer Vielzahl von Partikeln, die auch als Teilchen bezeichnet werden können. Das Pulver aus Manganhydroxid ist für den dauerhaften Verbleib in der Heizkammer 1 bestimmt. Das Manganhydroxid dient als Katalysator für die Umsetzung von Wasserstoffperoxid in der Heizkammer 1. Das Wasserstoffperoxid ist in einer Wasserstoffperoxidlösung enthalten, die für jeweils einen Heizvorgang durch einen Einlass 3 in die Heizkammer 1 eingelassen und damit in das Heizwasser 2 gemischt wird. Das Wasserstoffperoxid wird dann unter Abgabe von Wärme in gasförmigen Sauerstoff und flüssiges Wasser umgesetzt.

Zur Beschleunigung der Umsetzung des Wasserstoffperoxids wird das Manganhydroxid aufgewirbelt und im Heizwasser 2 verteilt, so dass zur selben Zeit viel Wasserstoffperoxid mit der Oberfläche der Partikel aus Manganhydroxid in Berührung kommt. Hierzu weist das Heizsystem ein Rührwerk 4 mit einem am Boden der Heizkammer 1 befindlichen Magnetstab 5 und einem unter der Heizkammer 1 angeordneten magnetischen Antrieb 6 für den Magnetstab 5 auf, um den Magnetstab 5 berührungslos im Heizwasser 2 zu rotieren.

In die Heizkammer ist ein Wärmetauscher 25 integriert, der als ein durch die Heizkammer 1 geführter Leitungsstrang ausgeführt ist. Der Wärmetauscher 25 ist durch einen Vorlauf 7 und einen Rücklauf 8 in einen Heizkreis eingebunden.

Der aus der Umsetzung entstehende gasförmige Sauerstoff kann über einen Gasabfuhranschluss 9 im oberen Bereich der Heizkammer 1 abgeführt werden. Das aus der Umsetzung entstehende Wasser erhöht die Menge Heizwasser 2 in der Heizkammer 1, sorgt also für Überschusswasser in der Heizkammer 1, das nach dem Heizvorgang oder nach mehreren Heizvorgängen abgeführt werden muss, um einen maximal zulässigen Füllstand der Heizkammer 1 auch nach dem Einlassen der Wasserstoffperoxidlösung nicht zu überschreiten. Das Überwasser wird durch Ablassen von Überwasser in Form von Klarwasser durch einen Überwasserablauf 10 vermindert. Hierfür wird vorab das Rührwerk 4 abgeschaltet und zumindest so lange gewartet, bis sich das Manganhydroxid so weit in den unteren Teil der Heizkammer 1 abgesetzt hat, dass sich in dem Bereich, in dem sich der Überwasserablauf 10 befindet, tatsächlich nur noch Klarwasser ohne Partikel aus Manganhydroxid befindet. Das Manganhydroxid verbleibt daher in der Heizkammer 1.

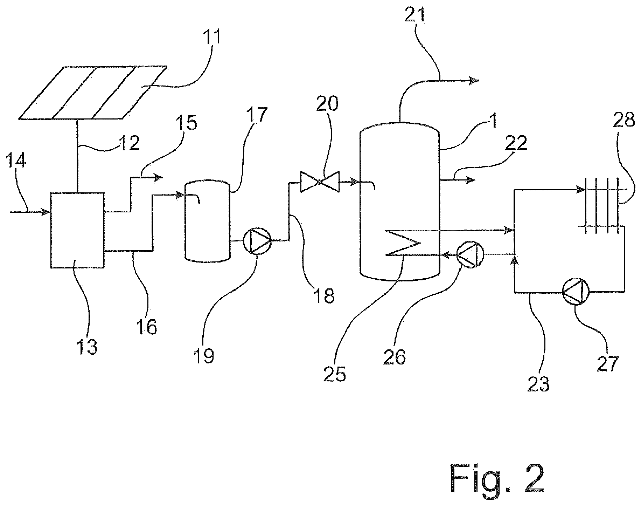

Figur 2 zeigt ein Fließschema mit der Heizkammer 1 von Figur 1 und weiteren Einrichtungen des erfindungsgemäßen Heizsystems zur Veranschaulichung ihres Zusammenwirkens. Die primär vorgesehene Verwendung der Erfindung bezieht sich auf das zeitlich lange Speichern von Energie ohne hierdurch verstärkte Energieverluste in Kauf nehmen zu müssen. Insbesondere soll Energie, die aufgrund hoher Sonneneinstrahlung im Sommer im Überfluss zur Verfügung steht, bis zum Winter gespeichert und dann zum Heizen eines Gebäudes verwendet werden.

Photovoltaikmodule 11, die beispielsweise auf dem Dach eines Einfamilienhauses angeordnet sind, sind über Elektrokabel 12 elektrisch mit einer Erzeugungseinheit 13 zur Erzeugung des Wasserstoffperoxids verbunden. Vorzugsweise sind hier noch nicht dargestellte elektrische Einrichtungen zur Steuerung oder Regelung des Betriebs der Photovoltaikmodule 11 zwischengeschaltet.

Die Erzeugungseinheit 13 bedient sich im Ausführungsbeispiel eines Elektrokatalyseverfahrens. Abweichend hiervon können im Rahmen der Erfindung jedoch auch andere Verfahren zur Erzeugung einer wässrigen Wasserstoffperoxidlösung eingesetzt werden und kann die Erzeugungseinheit daher auf entsprechend andere Weise ausgestaltet sein. Bei dem bevorzugten Elektrokatalyseverfahren, welches prinzipiell bekannt ist, etwa von Forschungtätigkeiten und davon abgeleiteten Publikationen der Universität von New South Wales in Australien, wird die Zweielektrodenoxidation mit der Wasserstoffentwicklungsreaktion gekoppelt. In einem Schritt wird dabei mittels der zugeführten elektrischen Energie und mittels eines Katalysators in Form einer Elektrode, bei der Kobalt auf Graphen Oxid verankert ist, direkt aus Wasser 14 Wasserstoffperoxid und Wasserstoff 15 erzeugt. Das erzeugte Wasserstoffperoxid wird in wässriger Wasserstoffperoxidlösung 16 in einer Speichereinheit 17 zwischengespeichert und darin beispielsweise vom Sommer bis zum Winter über mehrere Monate stabil aufbewahrt.

Wenn in der kalten Jahreszeit Wärme zum Heizen benötigt wird, wird schrittweise Wasserstoffperoxidlösung 18 aus der Speichereinheit 17 in die Heizkammer 1 geleitet. Für die entsprechende Steuerung sind beispielsweise eine Pumpe 19 und ein Ventil 20 in einer Leitung von der Speichereinheit 17 zur Heizkammer 1 vorgesehen. Bei der in jedem Schritt daraufhin in der Heizkammer 1 stattfindenden Zersetzungsreaktion des Wasserstoffperoxids wird die chemisch im Wasserstoffperoxid gebundene Energie als Wärmeenergie freigesetzt, die das Heizwasser 2 aufheizt. Wie zu Figur 1 beschrieben, sorgt dabei das Rührwerk 4 für eine gute Durchmischung des Katalysators Manganhydroxid im Heizwasser 2.

Als Ergebnis der Zersetzung wird Sauerstoff 21 freigesetzt und nimmt der Anteil Überwasser 22 im Heizwasser 2 zu. Durch den Wasserauslass 10 gemäß Figur 1 kann wieder Überwasser 22 aus dem Heizwasser 2 abgelassen werden, entweder nach dem Heizvorgang oder wenn das Überwasser nach einigen Heizvorgängen, also nach mehreren Schritten zur Erwärmung eine definierte Menge überschreitet.

In jedem Schritt zum Heizen wird die Temperatur des Heizwassers 2 um etwa 10 Grad Celsius erhöht. Je nach gewünschter Temperatur des mit dem Heizwasser 2 aufzuheizenden Heizkreiswassers 23 im bereits in der Beschreibung zu Figur 1 genannten und hier erstmals bezeichneten Heizkreis 24 zur Erwärmung des Hauses oder zur Erwärmung von Trinkwasser wird dem Heizwasser 2 daher bereits nach einem Schritt oder erst nach mehreren Schritten über den Wärmetauscher 25 wieder Wärmeenergie entzogen. Zur Umwälzung des Heizwassers 2 durch den Wärmetauscher 25 hindurch ist beispielsweise eine Pumpe 26 vorgesehen. Der Heizkreis 24 weist vorzugsweise eine weitere Pumpe 27 auf, der das Heizkreiswasser 23 umwälzt und zu mindestens einem Verbraucher, beispielsweise mindestens einen Heizkörper 28, führt. Der Verbraucher entzieht dem Heizkreis 24 wieder Energie, wobei das Heizkreiswasser 23 abkühlt.

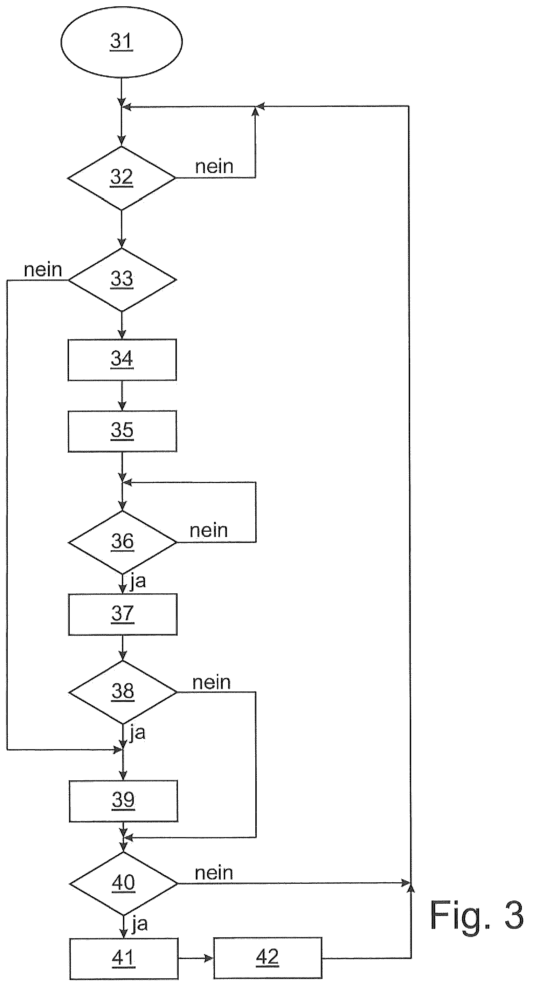

Figur 3 zeigt ein Flussdiagramm zur Veranschaulichung von Teilen des erfindungsgemäßen Verfahrens, das mit dem erfindungsgemäßen Heizsystem durchgeführt wird. Die Darstellung beschränkt sich herbei auf einige Teile des Verfahrens, welche das Aufheizen mittels chemisch gespeicherter Energie betreffen, also insbesondere im Winter stattfinden. Die primär im Sommer stattfindende Erzeugung des Wasserstoffperoxids und Einlagerung der das Wasserstoffperoxid enthaltenen Wasserstoffperoxidlösung 16 in der Speichereinheit 17 ist in Figur 3 hingegen nicht dargestellt.

Der Start der dargestellten Teile des Verfahrens ist mit dem Bezugszeichen 31 bezeichnet. Hiernach folgt die Abfrage 32, ob Wasser im Heizkreis 24 erwärmt werden soll. Solange dies nicht der Fall ist, kann dem mit "nein" beschrifteten Pfeil folgend gewartet werden.

Wenn jedoch das Wasser im Heizkreis 24 auf eine bestimmte Temperatur erhitzt werden soll, ergibt sich daraus eine Solltemperatur T_{Soll} für das Heizwasser 2, welches für Erwärmung des Wassers im Heizkreis 24 höher als die für das Wasser im Heizkreis 24 angestrebte Temperatur liegen sollte. Wenn die tatsächliche Isttemperatur T_{Ist} unter der Solltemperatur T_{Soll} liegt, muss das Heizwasser 2 also zunächst erwärmt werden. Für das Erfassen der Solltemperatur T_{Soll} ist vorzugsweise ein Temperatursensor in der Heizkammer 1 vorgesehen.

In einer Abfrage 33 wird daher abgefragt, ob die Isttemperatur T_{Ist} kleiner als die Solltemperatur T_{Soll} ist. Wenn dies der Fall ist, wird in einem Schritt 34 in Abhängigkeit vom Füllstand, also von der Menge Überwasser 22 im Heizwasser 2, genau so viel Wasserstoffperoxidlösung 18 in die Heizkammer 1 eingelassen, dass durch die nachfolgende Zersetzung des Wasserstoffperoxids eine Temperaturerhöhung des Heizwassers 2 von etwa 10 Grad Celsius erreicht wird. Der Füllstand ist entweder ein in Abhängigkeit von der insgesamt nachgefüllten Menge Wasserstoffperoxidlösung 18 seit dem letzten Ablassen von Überwasser 22 geschätzter Füllstand oder ein gemessener Füllstand.

Nachfolgend oder alternativ auch schon vor oder mit dem Schritt 34 wird in einem Schritt 35 das Rührwerk 4 eingeschaltet, sofern es nicht noch eingeschaltet ist, und bleibt zumindest so lange eingeschaltet, wie die Zersetzung des Wasserstoffperoxids noch nicht abgeschlossen ist, um zur Beschleunigung der Zersetzung den Katalysator Manganhydroxid aufzuwirbeln und im Heizwasser 2 zu verteilen. Auf den Fortschritt der Zersetzung kann beispielsweise indirekt anhand des Verlaufs der Temperaturveränderung des Heizwassers 2 geschlossen werden.

In einer Abfrage 36 wird abgefragt, ob die Zersetzung abgeschlossen ist und dann in einem Schritt 37 das Rührwerk 4 abgeschaltet oder bei anderen Ausführungsformen auch weiter betrieben, zumindest solange sich die aufgewirbelten Partikel Manganhydroxid nicht für ein Ablassen von Überwasser 22 aus der Heizkammer 2 absetzen sollen. Hiernach sollte die Temperatur des Heizwassers um etwa 10 Grad Celsius gestiegen sein. Je nach gewünschter Solltemperatur ist die Erwärmung damit beendet oder muss in noch wenigstens einer Stufe fortgesetzt werden.

Wenn gemäß einer Abfrage 38 daher die Isttemperatur T_{Ist} größer oder gleich der Solltemperatur T_{Soll} ist oder die Isttemperatur T_{Ist} gemäß der Abfrage 33 von vornherein nicht unter der Solltemperatur T_{Soll} lag, wird nachfolgend, insbesondere über den Wärmetauscher 25, in einem Schritt 39 dem Heizwasser 2 Wärmeenergie entzogen.

Bevor später bei erneuter Wärmeanforderung ein nächster Heizvorgang gestartet wird, muss sichergestellt sein, dass die Heizkammer 1 allenfalls so viel Überwasser 22 enthält, dass die Heizkammer 1 auch noch die für die Umsetzung notwendige Menge Wasserstoffperoxidlösung 18 aufnehmen kann. Daher wird gemäß einer Abfrage 40 festgestellt, ob die Menge Überwasser 22 im Heizwasser 2 einen Grenzwert übersteigt. Wenn dies der Fall ist, wird nach einer Wartezeit gemäß einem Schritt 41, also nachdem sich das Manganhydroxid ausreichend abgesetzt hat, in einem Schritt 42 geklärtes Überwasser 22 aus dem oberen Bereich der Heizwasserkammer 2 abgelassen. Danach oder nach der Abfrage 40, falls der Grenzwert darin nicht überschritten ist, wird wieder mit der Abfrage 32 auf die Anforderung einer Erwärmung des Heizwassers 2 gewartet.

## Patentansprüche

1. Verfahren zum Heizen, insbesondere eines Gebäudes, mit Energie, die zuvor in Form von Wasserstoffperoxid (H₂O₂) als chemischer Langzeitenergiespeicher gespeichert wird,
wobei eine Erzeugungseinheit (13) eines Heizsystems aus zumindest Wasser und mittels zugeführter Energie das Wasserstoffperoxid erzeugt und in einer wässrigen Wasserstoffperoxidlösung (16), die Wasser und das im Wasser gelöste Wasserstoffperoxid enthält, bereitstellt,
wobei das Heizsystem die bereitgestellte Wasserstoffperoxidlösung (16) in einer Speichereinheit (17) des Heizsystems speichert,
wobei das Heizsystem in der Speichereinheit (17) gespeicherte Wasserstoffperoxidlösung (18) in eine Heizkammer (1) des Heizsystems leitet und wobei das Heizsystem in der Heizkammer (1) befindliches Heizwasser (2), welches die aus der Speichereinheit (17) zugeführte Wasserstoffperoxidlösung (18) enthält, durch katalytische exotherme Zersetzung des im Heizwasser (2) enthaltenen Wasserstoffperoxids unter Abgabe von Wärme an das Heizwasser (2) aufheizt,
**dadurch gekennzeichnet,**
**dass** das in der Heizkammer (1) befindliche Heizwasser (2) frei im Heizwasser (2) bewegbares, insbesondere im Heizwasser (2) aufwirbelbares, Manganhydroxid (Mn(OH)₂) als Katalysator enthält, welches die Zersetzung des Wasserstoffperoxids beschleunigt.

2. Verfahren nach Anspruch 1, **dadurch gekennzeichnet, dass** das Manganhydroxid als Pulver, insbesondere über einzelne Heizvorgänge hinaus, im in der Heizkammer (1) befindlichen Heizwasser (2) verbleibt.

3. Verfahren nach einem der vorherigen Ansprüche, **dadurch gekennzeichnet, dass** das Heizsystem die Heizkammer (1) für einen Heizvorgang bis zu 1,5 mal bis 2,5 mal, insbesondere 1,8 mal bis 2,2 mal, besonders bevorzugt etwa 2 mal, so hoch befüllt, wie die, insbesondere zylinderförmige, Heizkammer (1) breit ist.

4. Verfahren nach einem der vorherigen Ansprüche, **dadurch gekennzeichnet, dass** ein Rührwerk (4) des Heizsystem in der Heizkammer (1) für eine Durchmischung des Manganhydroxids mit dem Wasserstoffperoxid sorgt.

5. Verfahren nach Anspruch 4, **dadurch gekennzeichnet, dass** ein außerhalb der Heizkammer (1) angeordneter magnetischer Antrieb (6) des Rührwerks (4) einen in der Heizkammer (1) angeordneten Magnetstab (5) des Rührwerks (4) antreibt und dadurch mit einer Frequenz von mindestens 1000 U/min und höchstens 1400 U/min, insbesondere von mindestens 1100 U/min und höchstens 1300 U/min, besonders bevorzugt von etwa 1200 U/min, rotieren lässt, um für eine Durchmischung des Manganhydroxids mit dem Wasserstoffperoxid im Heizwasser (2) zu sorgen.

6. Verfahren nach einem der vorherigen Ansprüche, **dadurch gekennzeichnet, dass** das Heizsystem nach mindestens einem Heizvorgang oder mehreren Heizvorgängen unter Zersetzung des jeweils in der Heizkammer (1) befindlichen Wasserstoffperoxids, insbesondere eine definierte Zeitdauer, wartet, bis sich das Manganhydroxid in einem unteren Bereich der Heizkammer (1) zumindest weitgehend abgesetzt hat und sich somit geklärtes Überwasser (22) in einem darüber befindlichen oberen Bereich der Heizkammer (1) befindet, und hiernach geklärtes Überwasser (22) aus dem oberen Bereich der Heizkammer (1) ablässt, wobei Heizwasser (2) mit dem Manganhydroxid im unteren Bereich der Heizkammer (1) verbleibt.

7. Verfahren nach einem der vorherigen Ansprüche, **dadurch gekennzeichnet, dass** die Erzeugungseinheit (13), welche eine Elektrolysezelle ist, das Wasserstoffperoxid allein aus Wasser (14), insbesondere unter Abgabe von Wasserstoff (15), mittels zugeführter elektrischer Energie erzeugt.

8. Verfahren nach einem der vorherigen Ansprüche, **dadurch gekennzeichnet, dass** das Heizsystem die Zersetzung des Wasserstoffperoxids schrittweise durchführt, wobei das Heizsystem in jedem Schritt Wasserstoffperoxidlösung (18) mit derart viel Wasserstoffperoxid in die Heizkammer (1) leitet, dass die jeweils nachfolgende, insbesondere vollständige, Zersetzung des im Heizwasser (2) befindlichen Wasserstoffperoxids die Temperatur in der Heizkammer (1) jeweils zwischen 8 Grad Celsius und 12 Grad Celsius, bevorzugt um etwa 10 Grad Celsius, erhöht.

9. Verfahren nach einem der vorherigen Ansprüche, **dadurch gekennzeichnet, dass** das Heizsystem in der Heizkammer (1) derart viel Manganhydroxid in der Heizkammer (1) vorhält und in die Heizkammer (1) derart viel Wasserstoffhydroxidlösung leitet, dass für den Zersetzungsprozess in der Heizkammer (1) Manganhydroxid in einer Konzentration im Bereich von 0,010 mol bis 0,014 mol, weiter bevorzugt in einer Konzentration von 0,011 mol bis 0,013 mol, besonders bevorzugt in einer Konzentration von etwa 0,012 mol, pro Liter Heizwasser (2) vorliegt.

10. Verfahren nach einem der vorherigen Ansprüche, **dadurch gekennzeichnet, dass** das Heizsystem mittels der Menge der in die Heizkammer (1) eingeleiteten Wasserstoffperoxidlösung (18) und mittels der Konzentration des Wasserstoffperoxids in dieser Wasserstoffperoxidlösung (18) die Konzentration des zu zersetzenden Wasserstoffperoxids im Heizwasser (2) unmittelbar nach dem Einlassen der Wasserstoffperoxidlösung (18) in die Heizkammer (1) auf einen Wert im Bereich von 0,3 mol pro Liter Heizwasser (2) bis 0,9 mol pro Liter Heizwasser (2), weiter bevorzugt im Bereich von 0,4 mol pro Liter Heizwasser (2) bis 0,6 mol pro Liter Heizwasser (2), besonders bevorzugt von etwa 0,44 mol pro Liter Heizwasser (2), einstellt.

11. Verfahren nach einem der vorherigen Ansprüche, **dadurch gekennzeichnet, dass** das Heizsystem die Wasserstoffperoxidlösung (18) aus der Speichereinheit (17) mit einem Anteil Wasserstoffperoxid in der Wasserstoffperoxidlösung (18) von weniger als 2,0 Gewichtsprozent, insbesondere maximal 1,8 Gewichtsprozent, besonders bevorzugt maximal 1,6 Gewichtsprozent, in die Heizkammer (1) leitet.

12. Heizsystem zum Heizen, insbesondere eines Gebäudes, mit Energie, die zuvor in Form von Wasserstoffperoxid (H₂O₂) als chemischer Langzeitenergiespeicher gespeichert wird,
mit einer Erzeugungseinheit (13) zur Erzeugung des Wasserstoffperoxids aus zumindest Wasser und mittels zugeführter Energie und zur Bereitstellung des erzeugten Wasserstoffperoxids in einer wässrigen Wasserstoffperoxidlösung (16), die Wasser und das im Wasser gelöste Wasserstoffperoxid enthält,
mit einer Speichereinheit (17) zum Speichern der bereitgestellten Wasserstoffperoxidlösung (16),
mit einer Heizkammer (1)
und mit Heizwasser (2), das sich in der Heizkammer (1) befindet,
wobei das Heizsystem ausgebildet ist zum Einleiten von in der Speichereinheit (17) gespeicherter Wasserstoffperoxidlösung (18) in die Heizkammer (1) und zum Aufheizen des in der Heizkammer (1) befindlichen Heizwassers (2), welches die aus der Speichereinheit (17) zugeführte Wasserstoffperoxidlösung (18) enthält, durch katalytische exotherme Zersetzung des im Heizwasser (2) enthaltenen Wasserstoffperoxids unter Abgabe von Wärme an das Heizwasser (2),
**dadurch gekennzeichnet,**
**dass** das in der Heizkammer (1) befindliche Heizwasser (2) frei im Heizwasser (2) bewegbares, insbesondere im Heizwasser (2) aufwirbelbares, Manganhydroxid (Mn(OH)₂) als Katalysator zur Beschleunigung der Zersetzung des Wasserstoffperoxids enthält.

13. Heizsystem nach Anspruch 12, **dadurch gekennzeichnet, dass** das Manganhydroxid im in der Heizkammer (1) befindlichen Heizwasser (2) ein Pulver ist.

14. Heizsystem nach Anspruch 12 oder 13, **dadurch gekennzeichnet, dass** die Heizkammer (1) derart bemessen und das Heizsystem dazu ausgebildet ist, die Heizkammer (1) bis zu 1,5 mal bis 2,5 mal, insbesondere 1,8 mal bis 2,2 mal, besonders bevorzugt etwa 2 mal, so hoch zu befüllen, wie die, insbesondere zylinderförmige, Heizkammer (1) breit ist.

15. Heizsystem nach einem der Ansprüche 12 bis 14, **dadurch gekennzeichnet, dass** das Heizsystem ein Rührwerk (4) für eine Durchmischung des Manganhydroxids mit dem Wasserstoffperoxid in der Heizkammer (1) aufweist.

16. Heizsystem nach Anspruch 15, **dadurch gekennzeichnet, dass** das Rührwerk (4) einen in der Heizkammer (1) angeordneten Magnetstab (5) aufweist und einen außerhalb der Heizkammer (1) angeordneten magnetischen Antrieb (6) für den Magnetstab (5) aufweist, der dazu eingerichtet ist, den Magnetstab (5) mit einer Frequenz von mindestens 1000 U/min und höchstens 1400 U/min, insbesondere von mindestens 1100 U/min und höchstens 1300 U/min, besonders bevorzugt von etwa 1200 U/min, in der Heizkammer (1) rotieren zu lassen, um für eine Durchmischung des Manganhydroxids mit dem Wasserstoffperoxid im Heizwasser (2) zu sorgen.

17. Heizsystem nach einem der Ansprüche 12 bis 16, **dadurch gekennzeichnet, dass** das Heizsystem dazu eingerichtet ist, nach mindestens einem Heizvorgang oder mehreren Heizvorgängen unter Zersetzung des jeweils in der Heizkammer (1) befindlichen Wasserstoffperoxids, insbesondere eine definierte Zeitdauer, zu warten, bis sich das Manganhydroxid in einem unteren Bereich der Heizkammer (1) zumindest weitgehend abgesetzt hat und sich somit geklärtes Überwasser (22) in einem darüber befindlichen oberen Bereich der Heizkammer (1) befindet, und hiernach geklärtes Überwasser (22) aus dem oberen Bereich der Heizkammer (1) abzulassen, wobei Heizwasser (2) mit dem Manganhydroxid im unteren Bereich der Heizkammer (1) verbleibt.

18. Heizsystem nach einem der Ansprüche 12 bis 17, **dadurch gekennzeichnet, dass** die Erzeugungseinheit (13) eine Elektrolysezelle ist, die dazu eingerichtet ist, das Wasserstoffperoxid aus Wasser (14), insbesondere unter Abgabe von Wasserstoff (15), mittels zugeführter elektrischer Energie zu erzeugen.

## Claims

1. A method for heating, in particular a building, using energy that is first stored in the form of hydrogen peroxide (H₂O₂) as a long-term chemical energy storage medium,
wherein a production unit (13) of a heating system produces hydrogen peroxide from at least water and by means of supplied energy, and provides it in an aqueous hydrogen peroxide solution (16) which contains water and the hydrogen peroxide dissolved in the water, wherein the heating system stores the provided hydrogen peroxide solution (16) in a storage unit (17) of the heating system,
wherein the heating system directs the hydrogen peroxide solution (18) stored in the storage unit (17) into a heating chamber (1) of the heating system, and wherein the heating system heats the heating water (2) located in the heating chamber (1), which contains the hydrogen peroxide solution (18) supplied from the storage unit (17), by means of catalytic exothermic decomposition of the hydrogen peroxide contained in the heating water (2) while releasing heat to the heating water (2),
**characterised in**
**that** the heating water (2) located in the heating chamber (1) contains manganese hydroxide (Mn(OH)₂) as a catalyst which is freely movable within the heating water (2) and, in particular, can be swirled up within the heating water (2), and which accelerates the decomposition of the hydrogen peroxide.

2. The method according to claim 1, **characterised in that** the manganese hydroxide remains as a powder in the heating water (2) located in the heating chamber (1), in particular beyond individual heating processes.

3. The method according to any one of the preceding claims, **characterised in that** the heating system fills the heating chamber (1) for a heating process up to 1.5 to 2.5 times, in particular 1.8 to 2.2 times, particularly preferably approximately 2 times as high as the, in particular cylindrical, heating chamber (1) is wide.

4. The method according to any one of the preceding claims, **characterised in that** an agitator (4) of the heating system in the heating chamber (1) ensures that the manganese hydroxide is mixed with the hydrogen peroxide.

5. The method according to claim 4, **characterised in that** a magnetic drive (6) of the agitator (4), which magnetic drive is arranged outside the heating chamber (1), drives a magnetic rod (5) of the agitator (4), which magnetic rod is arranged within the heating chamber (1), and thereby rotates it at a frequency of at least 1000 rpm and at most 1400 rpm, in particular at least 1,100 rpm and at most 1,300 rpm, particularly preferably approximately 1,200 rpm, in order to ensure that the manganese hydroxide is mixed with the hydrogen peroxide in the heating water (2).

6. The method according to any one of the preceding claims, **characterised in that**, after at least one heating process or multiple heating processes while decomposing the hydrogen peroxide present in the heating chamber (1) in each case, the heating system waits in particular for a defined period of time until the manganese hydroxide has settled, at least to a large extent, in a lower region of the heating chamber (1) and clarified surplus water (22) is thus present in an upper region of the heating chamber (1) situated thereabove, and thereafter drains the clarified surplus water (22) from the upper region of the heating chamber (1), wherein heating water (2) with the manganese hydroxide remains in the lower region of the heating chamber (1).

7. The method according to any one of the preceding claims, **characterised in that** the production unit (13), which is an electrolysis cell, produces hydrogen peroxide solely from water (14), in particular whilst releasing hydrogen (15), by means of supplied electrical energy.

8. The method according to any one of the preceding claims, **characterised in that** the heating system carries out the decomposition of the hydrogen peroxide in stages, wherein in each stage, the heating system directs a hydrogen peroxide solution (18) containing hydrogen peroxide in such a quantity into the heating chamber (1) that each subsequent, in particular complete, decomposition of the hydrogen peroxide present in the heating water (2) raises the temperature in the heating chamber (1) in each case by 8 degrees Celsius to 12 degrees Celsius, preferably by approximately 10 degrees Celsius.

9. The method according to any one of the preceding claims, **characterised in that** the heating system provides in the heating chamber (1) such a quantity of manganese hydroxide in the heating chamber (1) and directs such a quantity of hydrogen hydroxide solution into the heating chamber (1) that, for the decomposition process in the heating chamber (1), manganese hydroxide is present at a concentration in the range of 0.010 mol to 0.014 mol, more preferably at a concentration of 0.011 mol to 0.013 mol, particularly preferably at a concentration of approximately 0.012 mol, per litre of heating water (2).

10. The method according to any one of the preceding claims, **characterised in that** the heating system regulates, by means of the quantity of hydrogen peroxide solution (18) introduced into the heating chamber (1) and by means of the concentration of hydrogen peroxide in this hydrogen peroxide solution (18), the concentration of hydrogen peroxide to be decomposed in the heating water (2) immediately after the hydrogen peroxide solution (18) is introduced into the heating chamber (1) to a value in the range of 0.3 mol per litre of heating water (2) to 0.9 mol per litre of heating water (2), more preferably in the range of 0.4 mol per litre of heating water (2) to 0.6 mol per litre of heating water (2), particularly preferably at approximately 0.44 mol per litre of heating water (2).

11. The method according to any one of the preceding claims, **characterised in that** the heating system directs the hydrogen peroxide solution (18) from the storage unit (17) with a hydrogen peroxide content in the hydrogen peroxide solution (18) of less than 2.0 percent by weight, in particular a maximum of 1.8 percent by weight, particularly preferably a maximum of 1.6 percent by weight, into the heating chamber (1).

12. A heating system for heating, in particular a building, using energy that is first stored in the form of hydrogen peroxide (H₂O₂) as a long-term chemical energy storage medium,
with a production unit (13) for producing the hydrogen peroxide from at least water and by means of supplied energy, and for providing the produced hydrogen peroxide in an aqueous hydrogen peroxide solution (16) containing water and the hydrogen peroxide dissolved in the water,
with a storage unit (17) for storing the provided hydrogen peroxide solution (16),
with a heating chamber (1),
and with heating water (2) located in the heating chamber (1),
wherein the heating system is designed for introducing hydrogen peroxide solution (18) stored in the storage unit (17) into the heating chamber (1) and for heating the heating water (2) located in the heating chamber (1), which contains the hydrogen peroxide solution (18) supplied from the storage unit (17), by means of catalytic exothermic decomposition of the hydrogen peroxide contained in the heating water (2) while releasing heat to the heating water (2), **characterised in**
**that** the heating water (2) located in the heating chamber (1) contains manganese hydroxide (Mn(OH)₂) as a catalyst which is freely movable within the heating water (2) and, in particular, can be swirled up within the heating water (2) for accelerating the decomposition of the hydrogen peroxide.

13. The heating system according to claim 12, **characterised in that** the manganese hydroxide in the heating water (2) located in the heating chamber (1) is a powder.

14. The heating system according to claim 12 or 13, **characterised in that** the heating chamber (1) is dimensioned and the heating system is designed to fill the heating chamber (1) up to 1.5 to 2.5 times, in particular 1.8 to 2.2 times, particularly preferably approximately 2 times as high as the, in particular cylindrical, heating chamber (1) is wide.

15. The heating system according to any one of claims 12 to 14, **characterised in that** the heating system has an agitator (4) for mixing the manganese hydroxide with the hydrogen peroxide in the heating chamber (1).

16. The heating system according to claim 15, **characterised in that** the agitator (4) has a magnetic rod (5) arranged within the heating chamber (1) and has a magnetic drive (6) for the magnetic rod (5), which magnetic drive is arranged outside the heating chamber (1) and is configured to rotate the magnetic rod (5) at a frequency of at least 1000 rpm and at most 1400 rpm, in particular at least 1100 rpm and at most 1300 rpm, particularly preferably approximately 1,200 rpm, in the heating chamber (1) in order to ensure that the manganese hydroxide is mixed with the hydrogen peroxide in the heating water (2).

17. The heating system according to any one of claims 12 to 16, **characterised in that**, after at least one heating process or multiple heating processes while decomposing the hydrogen peroxide present in the heating chamber (1) in each case, the heating system is configured to wait in particular for a defined period of time until the manganese hydroxide has settled, at least to a large extent, in a lower region of the heating chamber (1) and clarified surplus water (22) is thus present in an upper region of the heating chamber (1) situated thereabove, and thereafter to drain the clarified supernatant (22) from the upper region of the heating chamber (1), wherein heating water (2) with the manganese hydroxide remains in the lower region of the heating chamber (1).

18. The heating system according to any one of claims 12 to 17, **characterised in that** the production unit (13) is an electrolysis cell which is configured to produce hydrogen peroxide from water (14), in particular whilst releasing hydrogen (15), by means of supplied electrical energy.

## Revendications

1. Procédé pour chauffer, en particulier un bâtiment, avec de l'énergie, qui est préalablement accumulée sous la forme de peroxyde d'hydrogène (H₂O₂) en tant qu'accumulateur d'énergie à long terme chimique, sachant qu'une unité de production (13) d'un système de chauffage produit le peroxyde d'hydrogène à partir au moins d'eau et au moyen de l'énergie acheminée et le fournit dans une solution de peroxyde d'hydrogène aqueuse (16), qui contient de l'eau et le peroxyde d'hydrogène dissous dans l'eau,
sachant que le système de chauffage accumule la solution de peroxyde d'hydrogène (16) fournie dans une unité d'accumulation (17) du système de chauffage,
sachant que le système de chauffage conduit la solution de peroxyde d'hydrogène (18) accumulée dans l'unité d'accumulation (17) dans une chambre de chauffe (1) du système de chauffage,
et sachant que le système de chauffage chauffe l'eau de chauffage (2) se trouvant dans la chambre de chauffe (1), laquelle contient la solution de peroxyde d'hydrogène (18) acheminée de l'unité d'accumulation (17), par décomposition catalytique exothermique du peroxyde d'hydrogène contenu dans l'eau de chauffage (2) en délivrant de la chaleur à l'eau de chauffage (2),
**caractérisé en ce que**
l'eau de chauffage (2) se trouvant dans la chambre de chauffe (1) contient de l'hydroxyde de manganèse (Mn(OH)₂) librement mobile dans l'eau de chauffage (2), pouvant être mis en suspension par tourbillons, en particulier dans l'eau de chauffage (2), en tant que catalyseur, lequel accélère la décomposition du peroxyde d'hydrogène.

2. Procédé selon la revendication 1, **caractérisé en ce que** l'hydroxyde de manganèse reste en tant que poudre, en particulier au-delà des cycles de chauffage individuels, dans l'eau de chauffage (2) se trouvant dans la chambre de chauffe (1).

3. Procédé selon l'une quelconque des revendications précédentes, **caractérisé en ce que** le système de chauffage remplit la chambre de chauffe (1) pour un cycle de chauffage jusqu'à 1,5 fois à 2,5 fois, en particulier 1,8 fois à 2,2 fois, en particulier de préférence environ 2 fois, aussi haut que la chambre de chauffe (1) en particulier cylindrique, est large.

4. Procédé selon l'une quelconque des revendications précédentes, **caractérisé en ce qu'**un mécanisme d'agitation (4) du système de chauffage assure dans la chambre de chauffe (1) un mélange de l'hydroxyde de manganèse avec le peroxyde d'hydrogène.

5. Procédé selon la revendication 4, **caractérisé en ce qu'**un entraînement (6) magnétique du mécanisme d'agitation (4), disposé en dehors de la chambre de chauffe (1), entraîne une barre magnétique (5) du mécanisme d'agitation (4) disposée dans la chambre de chauffe (1) et la fait tourner de ce fait à une fréquence d'au moins 1000 tr/min et au maximum de 1400 tr/min, en particulier d'au moins 1100 tr/min et au maximum de 1300 tr/min, en particulier de préférence à environ 1200 tr/min pour assurer un mélange de l'hydroxyde de manganèse avec le peroxyde d'hydrogène dans l'eau de chauffage (2).

6. Procédé selon l'une quelconque des revendications précédentes, **caractérisé en ce que** le système de chauffage attend après au moins un cycle de chauffage ou plusieurs cycles de chauffage en décomposant le peroxyde d'hydrogène se trouvant à chaque fois dans la chambre de chauffe (1), en particulier une période de temps définie jusqu'à ce que l'hydroxyde de manganèse se soit au moins largement déposé dans une zone inférieure de la chambre de chauffe (1) et que l'eau de surface (22) ainsi clarifiée se trouve dans une zone supérieure de la chambre de chauffe (1) se trouvant au-dessus et évacue après cela l'eau de surface (22) ainsi clarifiée de la zone supérieure de la chambre de chauffe (1), sachant que l'eau de chauffage (2) reste avec l'hydroxyde de manganèse dans la zone inférieure de la chambre de chauffe (1).

7. Procédé selon l'une quelconque des revendications précédentes, **caractérisé en ce que** l'unité de production (13), laquelle est une cellule d'électrolyse, produit le peroxyde d'hydrogène uniquement à partir de l'eau (14), en particulier en délivrant de l'hydrogène (15), au moyen de l'énergie électrique fournie.

8. Procédé selon l'une quelconque des revendications précédentes, **caractérisé en ce que** le système de chauffage exécute progressivement la décomposition du peroxyde d'hydrogène, sachant que le système de chauffage conduit dans chaque étape la solution de peroxyde d'hydrogène (18) dans la chambre de chauffe (1) avec beaucoup de peroxyde d'hydrogène telle que la décomposition à chaque fois successive, en particulier complète du peroxyde d'hydrogène se trouvant dans l'eau de chauffage (2) augmente la température dans la chambre de chauffe (1) à chaque fois entre 8 degrés Celsius et 12 degrés Celsius, de préférence d'environ 10 degrés Celsius.

9. Procédé selon l'une quelconque des revendications précédentes, **caractérisé en ce que** le système de chauffage dans la chambre de chauffe (1) maintient beaucoup d'hydroxyde de manganèse dans la chambre de chauffe (1) et conduit beaucoup de solution de peroxyde d'hydrogène dans la chambre de chauffe (1) de telle de manière que pour le processus de décomposition dans la chambre de chauffe (1), l'hydroxyde de manganèse est présent à une concentration de l'ordre de 0,010 mol à 0,014 mol, de préférence en plus à une concentration de 0,011 mol à 0,013 mol, en particulier de préférence à une concentration d'environ 0,012 mol, par litre d'eau de chauffage (2).

10. Procédé selon l'une quelconque des revendications précédentes, **caractérisé en ce que** le système de chauffage au moyen de la quantité de la solution de peroxyde d'hydrogène (18) introduite dans la chambre de chauffe (1) et au moyen de la concentration de peroxyde d'hydrogène dans cette solution de peroxyde d'hydrogène (18), règle la concentration du peroxyde d'hydrogène à décomposer dans l'eau de chauffage (2) directement après l'admission de la solution de peroxyde d'hydrogène (18) dans la chambre de chauffe (1) à une valeur de l'ordre de 0,3 mol par litre d'eau de chauffage (2) à 0,9 mol par litre d'eau de chauffage (2), de préférence en plus de l'ordre de 0,4 mol par litre d'eau de chauffage (2) à 0,6 mol par litre d'eau de chauffage (2), en particulier de préférence d'environ 0,44 mol par litre d'eau de chauffage (2).

11. Procédé selon l'une quelconque des revendications précédentes, **caractérisé en ce que** le système de chauffage conduit dans la chambre de chauffe (1) la solution de peroxyde d'hydrogène (18) de l'unité d'accumulation (17) avec une partie de peroxyde d'hydrogène dans la solution de peroxyde d'hydrogène (18) de moins de 2,0 pourcentage en poids, en particulier au maximum 1,8 de pourcentage en poids, en particulier de préférence au maximum 1,6 de pourcentage en poids.

12. Système de chauffage pour chauffer, en particulier un bâtiment, avec de l'énergie, qui est accumulée préalablement sous la forme de peroxyde d'hydrogène (H₂O₂) en tant qu'accumulateur d'énergie à long terme chimique,
avec une unité de production (13) pour produire le peroxyde d'hydrogène à partir au moins d'eau et au moyen de l'énergie fournie et pour fournir du peroxyde d'hydrogène produit dans une solution de peroxyde d'hydrogène aqueuse (16), qui contient de l'eau et le peroxyde d'hydrogène dissous dans l'eau,
avec une unité d'accumulation (17) pour accumuler la solution de peroxyde d'hydrogène fournie (16),
avec une chambre de chauffe (1),
et avec de l'eau de chauffage (2), qui se trouve dans la chambre de chauffe (1),
sachant que le système de chauffage est constitué pour introduire de la solution de peroxyde d'hydrogène (18) accumulée dans l'unité d'accumulation (17) dans la chambre de chauffe (1) et pour chauffer l'eau de chauffage (2) se trouvant dans la chambre de chauffe (1), laquelle contient la solution de peroxyde d'hydrogène (18) acheminée de l'unité d'accumulation (17) par décomposition catalytique exothermique du peroxyde d'hydrogène contenu dans l'eau de chauffage (2) en délivrant de la chaleur à l'eau de chauffage (2),
**caractérisé en ce que**
l'eau de chauffage (2) se trouvant dans la chambre de chauffe (1) contient de l'hydroxyde de manganèse (Mn(OH)₂) librement mobile dans l'eau de chauffage (2), pouvant être mis en suspension par tourbillons, en particulier dans l'eau de chauffage (2), en tant que catalyseur pour accélérer la décomposition du peroxyde d'hydrogène.

13. Système de chauffage selon la revendication 12, **caractérisé en ce que** l'hydroxyde de manganèse dans l'eau de chauffage (2) se trouvant dans la chambre de chauffe (1), est une poudre.

14. Système de chauffage selon la revendication 12 ou 13, **caractérisé en ce que** la chambre de chauffe (1) est dimensionnée de telle manière et le système de chauffage est constitué à cet effet pour remplir la chambre de chauffe (1) jusqu'à 1,5 fois à 2,5 fois, en particulier 1,8 fois à 2,2 fois, en particulier de préférence environ 2 fois, aussi haut que la chambre de chauffe (1) en particulier cylindrique, est large.

15. Système de chauffage selon l'une quelconque des revendications 12 à 14, **caractérisé en ce que** le système de chauffage comporte un mécanisme d'agitation (4) pour un mélange de l'hydroxyde de manganèse avec le peroxyde d'hydrogène dans la chambre de chauffe (1).

16. Système de chauffage selon la revendication 15, **caractérisé en ce que** le mécanisme d'agitation (4) comporte une barre magnétique (5) disposée dans la chambre de chauffe (1) et comporte un entraînement (6) magnétique pour la barre magnétique (5), disposé en dehors de la chambre de chauffage (1), qui est agencée pour faire tourner la barre magnétique (5) dans la chambre de chauffe (1) à une fréquence d'au moins 1000 tr/min et au maximum de 1400 tr/min, en particulier d'au moins 1100 tr/min et au maximum de 1300 tr/min, en particulier de préférence à environ 1200 tr/min pour assurer un mélange de l'hydroxyde de manganèse avec le peroxyde d'hydrogène dans l'eau de chauffage (2).

17. Système de chauffage selon l'une quelconque des revendications 12 à 16, **caractérisé en ce que** le système de chauffage est agencé pour attendre en particulier une période temps définie après au moins un cycle de chauffage ou plusieurs cycles de chauffage en décomposant le peroxyde d'hydrogène se trouvant à chaque fois dans la chambre de chauffe (1), jusqu'à ce que l'hydroxyde de manganèse se soit au moins largement déposé dans une zone inférieure de la chambre de chauffe (1) et que l'eau de surface (22) ainsi clarifiée se trouve dans une zone supérieure de la chambre de chauffe (1) se trouvant dessus et évacuer après cela l'eau de surface (22) clarifiée de la zone supérieure de la chambre de chauffe (1), sachant que l'eau de chauffage (2) reste avec l'hydroxyde de manganèse dans la zone inférieure de la chambre de chauffe (1).

18. Système de chauffage selon l'une quelconque des revendications 12 à 17, **caractérisé en ce que** l'unité de production (13) est une cellule d'électrolyse, qui est agencée pour produire le peroxyde d'hydrogène à partir de l'eau (14), en particulier en délivrant de l'hydrogène (15), au moyen de l'énergie électrique fournie.
